# EUROPEAN PATENT SPECIFICATION

(11) **EP 2 127 293 B1**
(45) Date of publication and mention of the grant of the patent: **23.10.2019**
(21) Application number: 07848666.9
(22) Date of filing: 21.12.2007
(51) Int. Cl.: H04L 29/06, H04N 7/00

(54) **MEDIA DEMAND AND PLAYBACK SYSTEM**
MEDIENANFRAGE- UND WIEDERGABESYSTEM
DEMANDE DE MÉDIA ET SYSTÈME DE LECTURE

(30) Priority: 22.12.2006 GB 0625810
(43) Date of publication of application: 02.12.2009
(73) Proprietor: Sky CP Limited, Isleworth, Middlesex TW7 5QD (GB)
(72) Inventor: KELLY, David, Isleworth Middlesex TW7 5QD (GB); JAMES, Nicholas, Wallington Surrey SM6 OTD (GB)
(74) Representative: Cross, James Peter Archibald
(86) International application number: PCT/GB2007/004942
(87) International publication number: WO 2008/078093

(56) References cited:
- WO-A-2004/021709
- GB-A- 2 407 727
- US-A1- 2006 085 816

## Description

### Field of the Invention

This invention relates to an apparatus, method and system for receiving and playback of media content, particularly in a video on demand (VOD) media system.

### Background of the Invention

In a conventional Video on Demand (VOD) system, a library of media content is stored at a media server. Typically in Pull VOD systems, users select media content from the library and the selected media content is streamed or downloaded to the user's media receiver. In Push VOD systems, media content may be transmitted to the user's media receiver prior to a request. In both systems, it is known for VOD media content providers to include embedded secondary media content within the transmitted media content, such as advertising clips, promotional video clips, trailers, sponsorship bumper clips, etc. The problem with providing the secondary media content in an embedded form is that the user may be able to bypass portions of the transmitted stream or downloaded media content to skip the secondary media. Therefore, an improved system and method controlling playback of these secondary media content is necessary.

GB2407727 discusses a system and method for delivering interactive video and audio content items, e.g. movie clips, music videos, adverts, to a user playback device, such as a television (TV) set. The content items are delivered within a video on demand (VoD) environment. Each content item has associated attributes that detail the navigational properties for that content item. The content items are delivered as entries in a content sequence. Nonlinear navigation of the video content sequence is facilitated by querying the associated attributes for the current content item and enabling navigational actions (e.g. FF/REW/PAUSE/SKIP/Jump to target) for that content item accordingly.

### Statement of the Invention

Aspects of the present invention are set out in the accompanying claim.

In one aspect of the present invention, an apparatus for playing back primary and secondary media content items received from a media server is provided as set out in claim 1.

In another aspect of the present invention, a method of playing back primary and secondary media content items received from a media server is provided as set out in claim 8.

Preferred embodiments are defined by the dependent claims.

### Brief Description of the Drawings

Specific embodiments of the present invention will now be described with reference to the accompanying drawings, in which:

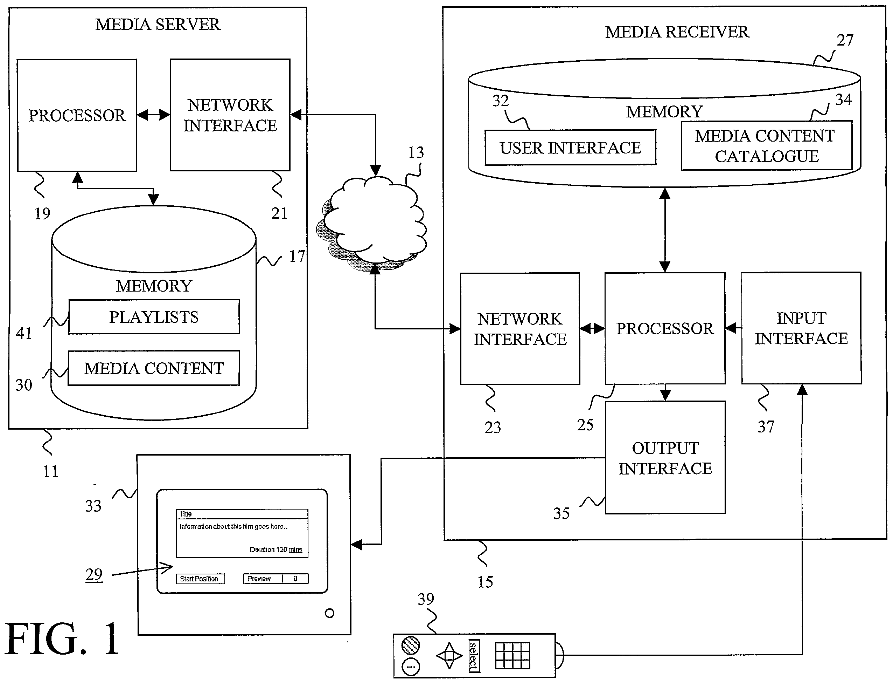

Figure 1 is a block diagram of a media system according to an embodiment of the invention;
Figure 2 is a schematic illustration of the components of a media content playlist;
Figure 3 is a schematic illustration of an example of a media content playlist template being processed into a viewable playlist;
Figure 4, which comprises Figures 4a and 4b, is a flow diagram of a playback operation in an embodiment of the invention;
Figure 5 is an illustration of examples of differing playback sessions;
Figure 6 is an illustration of a user interface that is displayed to the user; and
Figure 7 is a diagram of the options available the user in the user interface of Figure 6.

portion of the received media content if user requests streaming playback of the media content. Alternatively, the memory 27 may include a hard disk for storing the received playlist and media content for later playback. The memory 27 also stores a media content catalogue 34 which is an application used by the media receiver 15 to access the media content 30 available from the media server 11. The media content catalogue 34 maintains a listing of the available media content 30 on the media server 11 and the media receiver 15 receives updated listings from the media server 11, for example, whenever new media content 30 is made available on the media server 11.

A user interface 32 is also stored in the memory which lists content items 30 available from the media server 11 and allows user to select listed content items for playback to an audio visual display 33 via a suitable output interface 35. The media receiver 15 also includes a suitable input interface 37, such as an IR receiver for receiving input commands by a user via a remote controller 39.

### Playback Operation

In the following description, the media content items 30 which are stored in the media server 11 are referred to as assets and are files in the media server 11 which provide an instance of a movie, and advertisement clip, a TV show, or any other type of content that will be played back to the viewer. A sequence of one or more of these assets makes up a playlist 41.

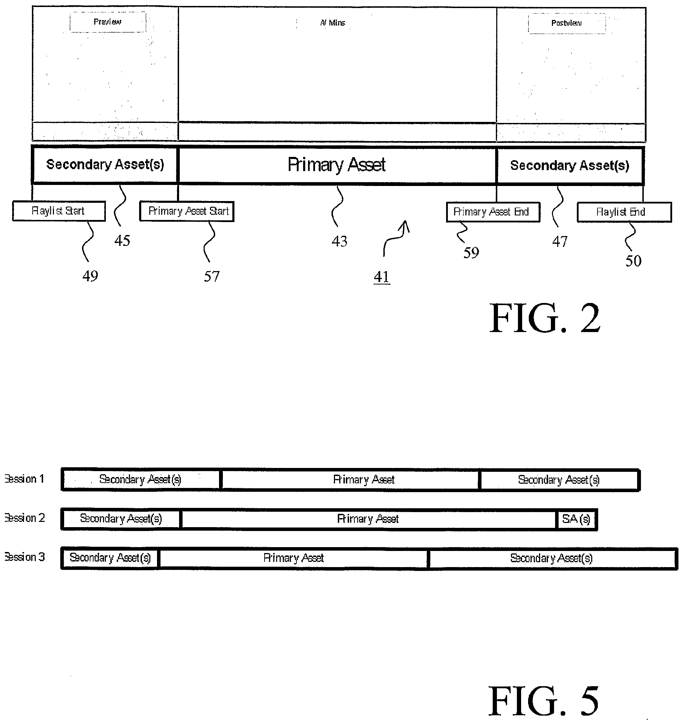

Figure 2 is a schematic illustration of a playlist and shows a primary asset 43, one or more preview secondary assets 45 provided at a playback position before the primary asset 43 and one or more postview secondary assets 47 provided at a playback position after the primary asset 43. A primary asset is the key content that the viewer expects to view once they have selected a particular media content item via the user interface 32. Primary assets associated with a media content item will remain unchanged. For example, if an advert is included within the primary asset, it will remain there until the asset is re-ingested. Typically, some of the primary assets meta data will be used in the description of the media content item, such as the title or the synopsis. Secondary assets refer to all of the other material except for primary assets that make up a playlist 41. These are typically commercial advertisement clips (advert), promotional feature video clips (promo), certificates specialised for a primary asset rating or brand (Cert), an ID or bumper that has a specific relationship with a sponsor (Sponsorship PresEvent), an ID or bumper not associated with a specific sponsor (PresEvent), trailers, etc. Some secondary assets may be associated with a primary asset in a fixed manner so that a particular secondary asset will always be included in a playlist containing the associated primary asset. Other secondary assets may be dynamically associated with a particular media content item and therefore can change associations with primary assets. A set of targeting rules may be provided to define the fixed and dynamic associations, as will be discussed below.

In the present embodiment, the media content catalogue 34 stored in the media receiver 15 includes a plurality of entries, each associated with a respective primary asset stored in the media server 11. A particular media content entry for a primary asset is selectable by a viewer via the user interface 32, for example, through a purchase or selection process to select the displayed entry for a desired media content item. The selection of a media content entry opens a playback session, whereby a playlist of assets is created and transmitted to the viewer's media receiver 15 by the media server 11.

In this embodiment, playlist templates are used to create a publishable playlist of assets that is transmitted to the viewer's media receiver 15. Selection of which playlist template to apply to a particular primary asset can be based on factors such as content provider, brand, programme name, rating and/or genre. Once applied to the primary asset, a playlist is generated that is based on the template. The playlist can subsequently be updated without changing the template it is based on.

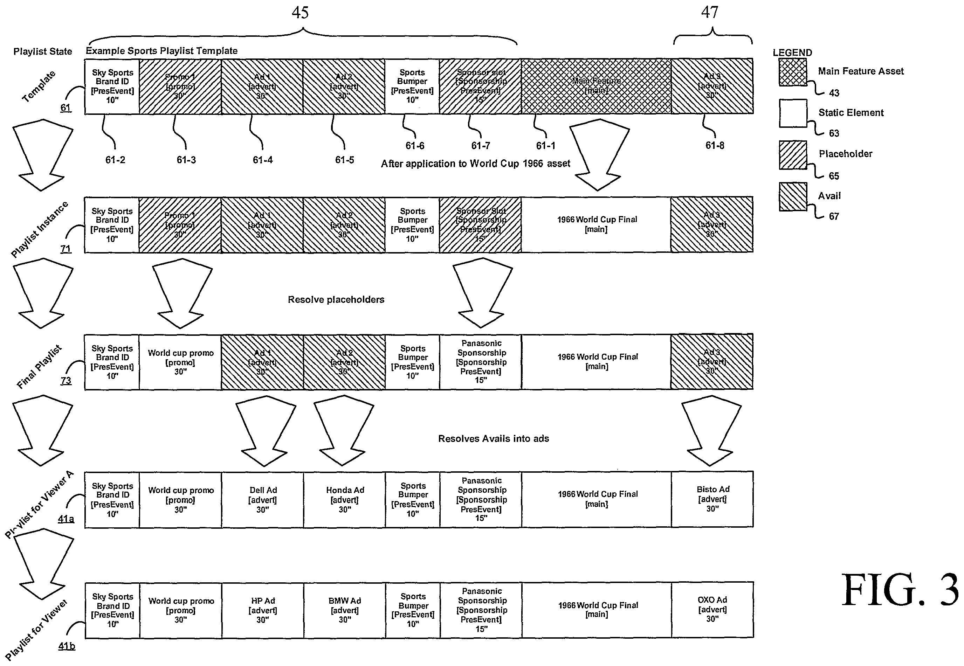

Figure 3 is a schematic illustration of an example media content playlist template being processed in accordance with the present invention into a viewable playlist. As shown in Figure 3, the example playlist template 61, contains three types of elements in addition to the primary asset 43 (main feature): "static" elements 63, "placeholder" elements 65 and "avail" elements 67. Static elements 63 are pre-determined in the template 61 and will be applied to every playlist based on the template 61. Static elements 63 include, for example, IDs and bumpers. Additionally, as secondary assets are applied, assigned and resolved to respective template elements, the elements are then considered to be static. Placeholder elements 65 are gaps in the template 61 which must be filled with a secondary asset to fill the hole in the playlist 41 before the playlist can be published and transmitted to the viewer's media receiver 15. Placeholder elements 65 include, for example, promos and sponsorships. Avail elements 67 are also gaps in the template but are not required to be filled in prior to publication. Instead, the gaps in the template 61 representing an avail element 67 are dynamically resolved and populated when a viewer begins to stream or download the published playlist 41. As those skilled in the art will appreciate, a playlist 41 based on a template 61 containing no placeholder elements 65 is immediately publishable. Playlists with one or more placeholder element 65 cannot be published until the respective gaps are filled with appropriate secondary assets.

As shown in Figure 3, processing of a playlist template 61 into a viewable playlist 41 begins with application of the user requested primary asset 43 to the main feature element in the template 61. In the example shown in Figure 3, the requested main feature is the "1966 World Cup Final" and the selected template is a sports playlist template 61. This results in a playlist instance 71 of the template 61, with the "1966 World Cup Final" inserted as the main feature asset 61-1. As shown in Figure 3, the preview secondary assets 45 specified by this sports playlist template 61 include the following elements in sequence: a Sky Sports Brand ID static element 61-2, a promo placeholder 61-3, two advert avail elements 61-4 and 61-5, a sports bumper static element 61-6 and a sponsor slot placeholder 61-7. The postview secondary assets 47, in this example, includes a single advert avail element 61-8.

The next step is to resolve the placeholder elements 65 in the playlist instance 71. In the example shown in Figure 3, a final publishable playlist 73 is generated by applying a "World cup promo" to the promo placeholder element 61-3 and a "Panasonic Sponsorship" to the sponsorship placeholder element 61-7. As discussed above, the avail elements 67 in the final publishable playlist 73 are resolved when the playlist 73 is to be transmitted to the viewer's media receiver 15. As shown in Figure 3, advert avail elements 61-4, 61-5 and 61-8 are filled in with different adverts for different users resulting in two different playlists 41a and 41b which are transmitted to respective media receivers 15.

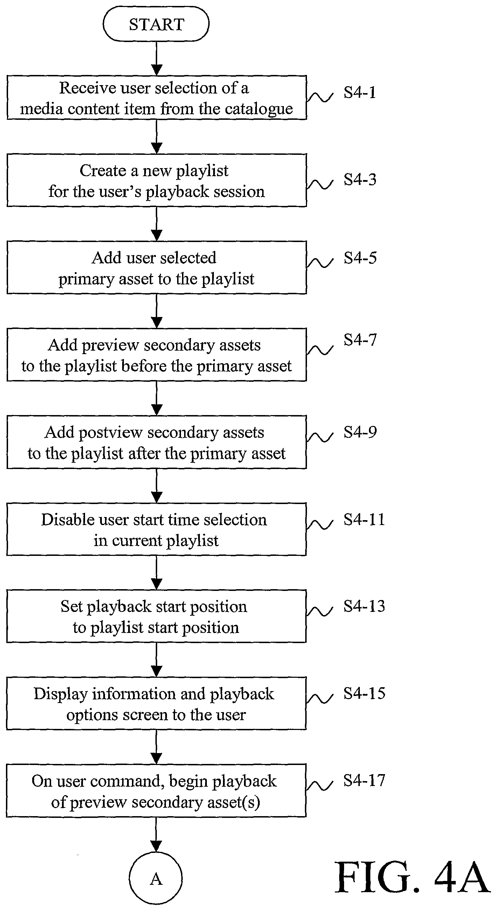

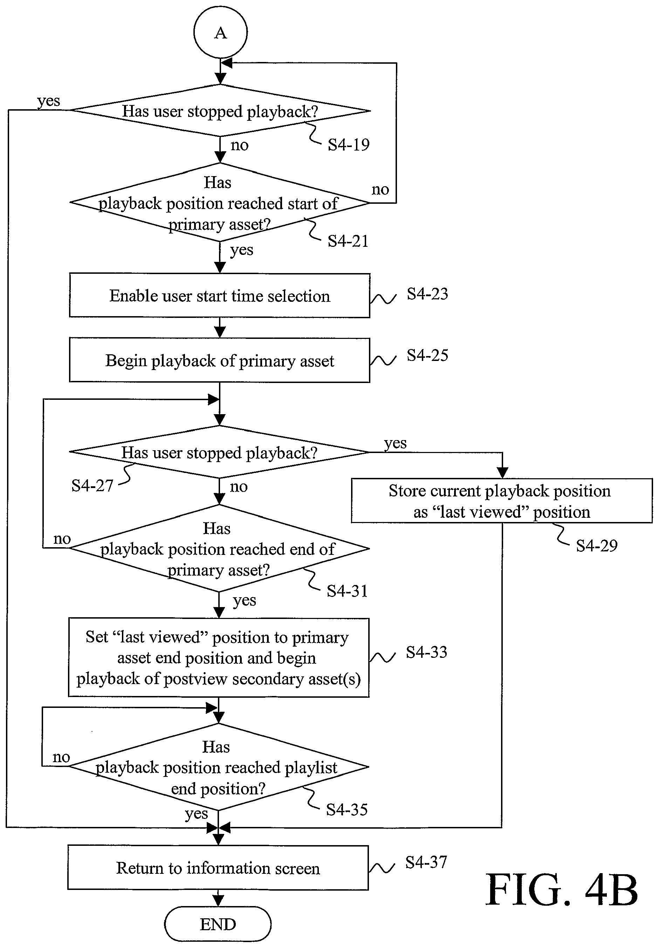

Figure 4, which comprises Figures 4a and 4b, is a flow diagram illustrating the operation of the media system to respond to a user demand and to play back the user selected media content item.

Referring now to Figure 4A, at step S4-1, the selection and playback operation begins with the media receiver 15 receiving a user selection of an entry in the media content catalogue 34 associated with a primary asset. As discussed above, this selection will typically be made by the user via a user interface 32 displayed on the audio-visual display 33 and the input receiver 37 receiving a user input from the remote control 39. Having received the user selection, the selected entry is transmitted by the media receiver 15 to the media server 11. In response to receiving the selected entry, the processor 19 of the media server 11 creates a new empty playlist 41 at step S4-3 based on a selected playlist template as discussed above. At step 3-5, the processor 25 adds the primary asset 43 associated with the user selected media content entry to the empty playlist 41. At step S4-7, the processor 25 then adds any preview secondary assets 45 to the playlist at a playback position before the primary asset 43. At step S4-9, the processor 25 adds any postview secondary assets 47 to the playlist at a playback position after the primary asset 43.

The present invention provides for a dynamic selection of secondary assets to be associated with a selected primary asset 43 whenever a new playlist is generated. With each new playback session, a different playlist template may be selected for the selected primary asset 43, resulting in different numbers and combinations of preview and postview secondary assets being added to the playlist. Each resulting playlist may therefore have different play back times, as shown in Figure 5. The way in which secondary assets are selected for inclusion in a playlist as well as the number of secondary assets to be added are defined by a given set of targeting rules. The targetting rules can be based on metadata of the selected primary asset 43 and can be time or date sensitive. The targeting rules define the fixed and dynamic associations between secondary assets and a primary asset and are therefore used to drive the dynamic insertion of secondary assets to populate the available slots. In this way, it is possible to dynamically change the secondary assets associated with a selected primary asset to take into account targeting rules to control aspects such as:
- controlling the exact point a secondary asset is inserted, for example, to ensure that an advertisement clip is the last advertisement shown before a primary asset and the first shown immediately after the primary asset;
- linking the advert inserted immediately before and immediately after a primary asset so that the advertisement is by the same advertiser;
- limiting secondary asset use by time of day to ensure that post-watershed advertisements are only shown at the right times;
- targeting secondary assets based on subscriber data, such as subscriber location, age, sex, socio-demographic group or region, etc.;
- inheriting the target audience from the primary asset;
- avoiding clashes between the primary asset and the secondary assets, for example clashes in subject-matter (avoiding car adverts within a movie about car crashes or clashes between artists in adverts and primary media content);
- monitoring the number of times a secondary asset is selected to fill a placeholder or avail element and therefore control the number of times that secondary asset is selected again.

This system also allows for no advertising to be associated with an item in the break preceding or following a media content item independently. Alternatively, a random selection from a pre-determined selection of advertising material can be associated with a particular media content item, for example, depending on the genre or sub-genre of that media content item.

Referring back to Figure 4, at step S4-11, the processor 25 disables user start time selection in the current playlist because this will be the first time that the user is playing any preview secondary assets in the playlist 41. This is achieved by setting the respective flags in the playlist 41 to disabled. In this embodiment, the media server 11 maintains a list of all subscribers/viewers and associated request primary assets, together with an indication of whether the respective subscriber/viewer has viewed all of the preview secondary media content items in their entirety. In this example, the preview secondary assets for the particular selected primary asset have not been viewed and the media server 11 would therefore store an indication that the particular user had requested the particular primary asset but had not watched all of the preview secondary assets in their entirety.

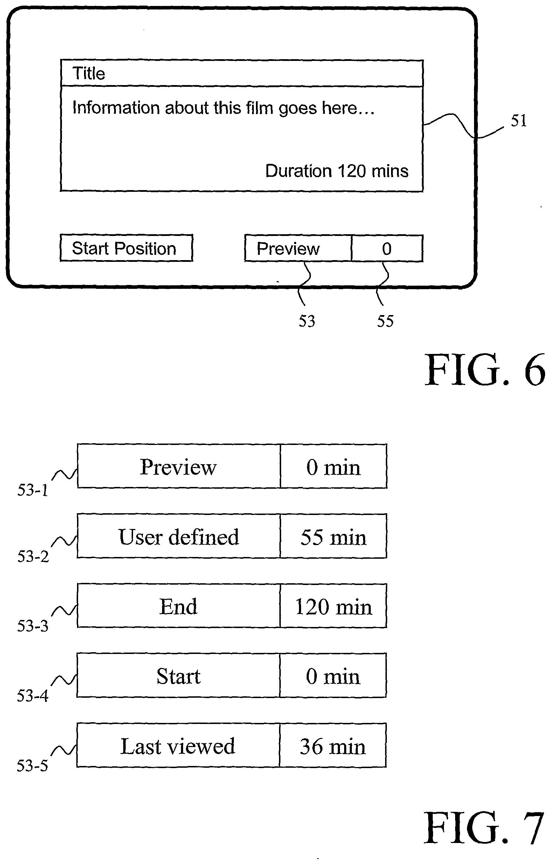

At step S4-13, the processor 25 sets the playback start position to the playlist start position 49 and at step S4-15, the processor 25 displays a play back screen of the user interface 32 to the user via the output interface 35. The displayed screen includes information about the selected media content item which could be the associated meta data of the primary asset 43. Figure 6 shows an example of the screen that is displayed. In the example screen, the information 51 includes the title, the synopsis and the time duration of the primary asset 43. The example screen illustrated in Figure 6 also shows a playback options field 53 for selecting a playback start position within the playlist 41. As shown in Figure 6, as this is the first time that the user will be playing the assets in the playlist 41, the start position is set as "preview" with the associated time field 55 set to "0 min". User selection of a start time is disabled until the user is viewing the primary asset 43. At step S4-17, in response to user input instructing the media receiver to begin playback, the processor 25 begins playback of any preview secondary assets 45 in the playlist 41. In the present embodiment, during this initial playback of the preview secondary assets 45, the user is unable to skip through bookmarks or secondary assets 45 during the playback. This will be enabled once the user has viewed the previous secondary assets 45 in their entirety.

Referring now to Figure 4B, once playback of the preview secondary assets 45 has begun, the processor 25 will monitor for user input indicating that the user wishes to stop playback of the playlist. If at step S4-19 the processor 25 receives input via the input interface 37 indicating that the user has stopped playback during initial playback of the secondary assets 45, playback operation will return the viewer to the information screen at step S4-37 and then terminates. The processor 25 also monitors the playback position and when it is determined at step S4-21 that the playback position has reached the start position 57 of the primary asset 43, then at step S4-23 the processor 25 enables user start time selection in the current playlist at step S4-23 because the preview secondary assets 45 have been played through in their entirety at least once. The media server 11 also updates the stored record to indicate that the preview secondary assets for the particular user and the particular selected primary asset have been viewed in their entirety. At step S4-25, the playback position will be at the primary asset start position 57 and the processor 25 begins playback of the primary asset 43.

As those skilled in the art will appreciate, if there are no preview secondary assets in the current playlist 41, then the processing will skip to step S4-21 where the processor 25 will determine that the start position 57 of the primary asset 43 has been reached.

During playback of the primary asset 43, the processor 25 will again monitor for user input indicating that the user wishes to stop playback. If, at step S4-27, the processor 25 determines that the user has stopped playback, then at step S4-29, the processor 25 stores the current playback position as a "last viewed" position in the playlist so that the user is able to select this "last viewed" position as a start time in a later playback session. Playback operation will then return to viewer to the information screen at step S4-37 and terminate. However, if at step S4-27 the user has not stopped playback, then processor 25 determines at step S4-31 if the playback position has reached the end 59 of the primary asset 43.

Once the processor 25 determines that the playback position has reached the end 59 of the primary asset 43, then the processor 25 sets the "last viewed" position to the primary asset end position 59 at step S4-33. This is to indicate to the user that the primary asset 43 has been viewed in its entirety if the user selects at a later time to resume playback from a "last viewed" position. As discussed above, this is because the user is not allowed to resume playback at an arbitrary playback position within the secondary assets 45 and 47, whether by way of user defined bookmarks or by setting of a "last viewed" position. At step S4-33, the processor 25 also begins playback of the postview secondary assets 47. At step S4-35, the processor 25 monitors for the playback position to reach the playlist end position 50 and once playback of the postview secondary assets 47 had completed, the viewer is returned to the information screen at step S4-37 and the playback operation is complete.

Figure 7 illustrates the five user selectable playback options which are available to the user via the user interface 32. The associated time fields are stored with each playlist 41 and store respective time references relative to the primary asset start position 57.

One of the options shown in Figure 7 is a preview option 53-1 which, as discussed above, can be chosen when playback of the playlist 41 is to begin at the playlist start position 49. This is the only option that is available to the user for the current playlist 41 until the user has viewed the preview secondary assets 45, if any, in their entirety at least once. Once this has happened, the user will then be provided with the further four options shown in Figure 7.

Another option shown in Figure 7 is the "user defined" playback start position 53-2 which, as discussed above, is a user defined bookmark at some playback point within the primary asset 43. In the example shown in Figure 7, the bookmark has been set at a playback position 55 minutes into the primary asset.

Another option shown in Figure 7 is the "end" start time 53-3 so that playback of the postview secondary assets 47 begins from the primary asset end position 59.

Another option shown in Figure 7 is a "start" playback start time 53-4 so that playback of the primary asset 43 will begin from the primary asset start position 57.

Finally, another option shown in Figure 7 is the "last viewed" start position 53-5 which, as discussed above, will resume playback of the primary asset 41 (or of the postview secondary assets 47 if the primary asset has been watched in its entirety) from where the user stops playback in a previous session.

In the above description, the media server 11 and the media receiver 15 are arranged to store and execute software which controls their respective operation to perform the method described with reference to Figure 4. As those skilled in the art will appreciate, a computer program for configuring a programmable device to become operable to perform the above method may be stored on a carrier and loaded into memory, such as a flash memory of the media server 11 and/or media receiver 15. The program may be downloaded as a satellite broadcast signal and applied as a patch or update to software already resident on the media server 11 and/or media receiver 15. The scope of the present invention includes the program, the carrier carrying the program and the broadcast signal.

### Alternative Embodiments

It will be understood that embodiments of the present invention are described herein by way of example only, and that various changes and modifications may be made without departing from the scope of the invention.

For example, in the embodiment described above, the media system is arranged to receive a request for a viewer selected primary asset and to generate and transmit a playlist to the viewer's media receiver. As those skilled in the art will appreciate, in an alternative system, the viewer's media receiver may already store a number of primary and secondary assets. This is typically the case in a Push VOD system for example, where the media content may have been transmitted to the media receiver without any viewer intervention. In such an alternative system, the media receiver may function to receive a viewer's selection of a primary asset and to generate a playlist from its stored media content in the same manner as described above. The playlist templates may also be stored locally on the media receiver or may be transmitted from the media server upon request. As yet a further alternative, the media receiver may be operable to transmit a request to the media server for any media content which is not stored locally and to receive and insert the media content into the playlist as discussed in the embodiment above. In this way, bandwidth consumption between the media server and media receiver can be minimised.

## Claims

1. A media receiver (15) adapted to play back received primary and secondary media content items received from a media server (11) in response to a request for a primary media content item (30, 43) available from the media server (11), comprising:
means (23,25) for transmitting a request to the media server (11) for the primary media content item stored on the media server;
means (27) for receiving a playlist (41) including a plurality of primary and secondary media content items transmitted from the media server (11) in response to the request for the primary media content item, wherein at least one of the secondary media content items is a preview secondary media content item provided at a playback position in the playlist before the requested primary media content item; said media receiver (15) being **characterized in** comprising
a processor (25) adapted to display a playback screen of a user interface (32) to the user, said playback screen containing a playback options field (53-1, 53-2, 53-3, 53-4, 53-5) for selecting a playback start position of the playlist, wherein the associated time fields to said playback options store respective time references relative to the primary media content item start position (57), wherein a preview option (53-1) is the only option available to the user for the current playlist (41) until the user has viewed the preview secondary media content items (45) in their entirety at least once, wherein once this has happened the user will be provided with further playback options fields (53-2, 53-3, 53-4, 53-5).

2. The apparatus of claim 1, wherein the primary media content items each comprise one of an instance of a movie, an audio and/or video programme or an audio and/or video clip; and
wherein the secondary media content items each comprise one of an advertisement clip, a promotional video clip, a trailer, or a sponsorship bumper clip.

3. The apparatus of claim 1 or 2, wherein the playlist includes at least one field for storing time position data.

4. The apparatus of claim 3, wherein the received playlist includes fields for storing a user defined playback position, a last viewed playback position and an end time position.

5. The apparatus of any preceding claim, wherein the playlist includes at least one flag for indicating playback options available to a user during playback of the media content items in the playlist.

6. The apparatus of claim 5, wherein the playlist stores a flag indicating whether user selection of a playback start time is enabled or disabled, and wherein the flag is set to enabled once playback of the at least one preview secondary media content item has been completed in its entirety.

7. The apparatus of any preceding claim, further comprising means for storing a listing of the media content available from the media server and wherein the apparatus is arranged to receive updates of the listing from the media server.

8. A method of playing back primary and secondary media content items in a media receiver (15), the method comprising, in said media receiver (15), the steps of :
transmitting a request to a media server (11) for a primary media content item (30, 43) available from the media server;
receiving a playlist (41) including a plurality of primary and secondary media content items transmitted from the media server in response to the request for the primary media content item, wherein at least one of the secondary media content items is a preview secondary media content item provided at a playback position in the playlist before the requested primary media content item; the method being **characterized in** comprising the steps of:
providing a playback screen of a user interface (32) to a user, said playback screen containing a playback options field (53-1, 53-2, 53-3, 53-4, 53-5) for selecting a playback start position of the playlist, wherein the associated time fields to said playback options store respective time references relative to the primary media content item start position (57), wherein a preview option (53-1) is the only option available to the user for the current playlist (41) until the user has viewed the preview secondary media content items (45) in their entirety at least once, wherein once this has happened the user will be provided with further playback options fields (53-2, 53-3, 53-4, 53-5).

9. A computer storage medium storing computer implementable instructions for configuring a programmable apparatus as the apparatus of any one of claims 1 to 7.

## Patentansprüche

1. Medienempfänger (15), der für Folgendes angepasst ist: Wiedergeben von empfangenen primären und sekundären Medieninhaltselementen, die als Reaktion auf eine Anforderung eines primären Medieninhaltselements (30, 43), das von dem Medienserver (11) verfügbar ist, von einem Medienserver (11) empfangen werden, umfassend:
Mittel (23, 25) zum Übertragen einer Anforderung des auf dem Medienserver gespeicherten primären Medieninhaltselements an den Medienserver (11);
ein Mittel (27) zum Empfangen einer Wiedergabeliste (41), beinhaltend eine Vielzahl von primären und sekundären Medieninhaltselementen, die als Reaktion auf die Anforderung des primären Medieninhaltselements von dem Medienserver (11) übertragen werden, wobei mindestens eines der sekundären Medieninhaltselemente ein sekundäres Vorschau-Medieninhaltselement ist, das an einer Wiedergabeposition in der Wiedergabeliste vor dem angeforderten primären Medieninhaltselement bereitgestellt ist; wobei der Medienempfänger (15) **dadurch gekennzeichnet ist, dass** er Folgendes umfasst:
einen Prozessor (25), der für Folgendes angepasst ist: Anzeigen eines Wiedergabebildschirms einer Benutzerschnittstelle (32) für den Benutzer, wobei der Wiedergabebildschirm ein Wiedergabeoptionsfeld (53-1, 53-2, 53-3, 53-4, 53-5) zum Auswählen einer Wiedergabestartposition der Wiedergabeliste enthält, wobei die assoziierten Zeitfelder für die Wiedergabeoptionen entsprechende Zeitreferenzen bezüglich der Startposition (57) des primären Medieninhaltselements speichern, wobei eine Vorschauoption (53-1) die einzige Option ist, die dem Benutzer für die gegenwärtige Wiedergabeliste (41) zur Verfügung steht, bis der Benutzer die sekundären Vorschau-Medieninhaltselemente (45) mindestens einmal gänzlich angeschaut hat, wobei, sobald dies erfolgt ist, dem Benutzer weitere Wiedergabeoptionsfelder (53-2, 53-3, 53-4, 53-5) bereitgestellt werden.

2. Vorrichtung nach Anspruch 1, wobei die primären Medieninhaltselemente jeweils eines von einer Instanz eines Films, eines Audio- und/oder Videoprogramms oder eines Audio- und/oder Videoclips umfassen; und
wobei die sekundären Medieninhaltselemente jeweils eines von einem Werbeclip, einem Reklamevideoclip, einem Trailer oder einem Sponsoring-Bumper-Clip umfassen.

3. Vorrichtung nach Anspruch 1 oder 2, wobei die Wiedergabeliste mindestens ein Feld zum Speichern von Zeitpositionsdaten beinhaltet.

4. Vorrichtung nach Anspruch 3, wobei die empfangene Wiedergabeliste Felder zum Speichern einer benutzerdefinierten Wiedergabeposition, einer Wiedergabeposition des zuletzt Angeschauten und einer Endzeitposition beinhaltet.

5. Vorrichtung nach einem der vorangehenden Ansprüche, wobei die Wiedergabeliste mindestens ein Flag zum Angeben von Wiedergabeoptionen, die einem Benutzer während der Wiedergabe der Medieninhaltselemente in der Wiedergabeliste zur Verfügung stehen, beinhaltet.

6. Vorrichtung nach Anspruch 5, wobei die Wiedergabeliste ein Flag speichert, das angibt, ob eine Benutzerauswahl einer Wiedergabestartzeit aktiviert oder deaktiviert ist, und wobei das Flag aktiviert wird, sobald die Wiedergabe des mindestens einen sekundären Vorschau-Medieninhaltselements gänzlich vollendet ist.

7. Vorrichtung nach einem der vorangehenden Ansprüche, ferner umfassend ein Mittel zum Speichern einer Auflistung des von dem Medienserver verfügbaren Medieninhalts, und wobei die Vorrichtung eingerichtet ist, um von dem Medienserver Aktualisierungen der Auflistung zu empfangen.

8. Verfahren zum Wiedergeben von primären und sekundären Medieninhaltselementen in einem Medienempfänger (15), wobei das Verfahren in dem Medienempfänger (15) die folgenden Schritte umfasst:
Übertragen einer Anforderung eines von dem Medienserver verfügbaren primären Medieninhaltselements (30, 43) an einen Medienserver (11);
Empfangen einer Wiedergabeliste (41), beinhaltend eine Vielzahl von primären und sekundären Medieninhaltselementen, die als Reaktion auf die Anforderung des primären Medieninhaltselements von dem Medienserver übertragen werden, wobei mindestens eines der sekundären Medieninhaltselemente ein sekundäres Vorschau-Medieninhaltselement ist, das an einer Wiedergabeposition in der Wiedergabeliste vor dem angeforderten primären Medieninhaltselement bereitgestellt ist; wobei das Verfahren **dadurch gekennzeichnet ist, dass** es die folgenden Schritte umfasst:
Bereitstellen eines Wiedergabebildschirms einer Benutzerschnittstelle (32) für einen Benutzer, wobei der Wiedergabebildschirm ein Wiedergabeoptionsfeld (53-1, 53-2, 53-3, 53-4, 53-5) zum Auswählen einer Wiedergabestartposition der Wiedergabeliste enthält, wobei die assoziierten Zeitfelder für die Wiedergabeoptionen entsprechende Zeitreferenzen bezüglich der Startposition (57) des primären Medieninhaltselements speichern, wobei eine Vorschauoption (53-1) die einzige Option ist, die dem Benutzer für die gegenwärtige Wiedergabeliste (41) zur Verfügung steht, bis der Benutzer die sekundären Vorschau-Medieninhaltselemente (45) mindestens einmal gänzlich angeschaut hat, wobei, sobald dies erfolgt ist, dem Benutzer weitere Wiedergabeoptionsfelder (53-2, 53-3, 53-4, 53-5) bereitgestellt werden.

9. Computerspeichermedium, das computerimplementierbare Anweisungen zum Konfigurieren einer programmierbaren Vorrichtung als die Vorrichtung nach einem der Ansprüche 1 bis 7 speichert.

## Revendications

1. Récepteur multimédia (15) adapté pour une lecture d'éléments de contenu multimédia principal et secondaire reçu, reçus à partir d'un serveur multimédia (11) en réponse à une demande d'élément de contenu multimédia principal (30, 43) disponible depuis le serveur multimédia (11), comprenant :
des moyens (23, 25) de transmission d'une demande au serveur multimédia (11) d'élément de contenu multimédia principal stocké sur le serveur multimédia ;
des moyens (27) de réception d'une liste de lecture (41) incluant une pluralité d'éléments de contenu multimédia principal et secondaire transmis à partir du serveur multimédia (11) en réponse à la demande d'élément de contenu multimédia principal, dans lequel au moins un des éléments de contenu multimédia secondaire est un élément de contenu multimédia secondaire d'aperçu fourni à une position de lecture dans la liste de lecture avant l'élément de contenu multimédia principal demandé ; ledit récepteur multimédia (15) étant **caractérisé en ce qu'**il comprend
un processeur (25) adapté pour afficher un écran de lecture d'une interface d'utilisateur (32) à l'utilisateur, ledit écran de lecture contenant un champ d'options de lecture (53-1, 53-2, 53-3, 53-4, 53-5) pour une sélection d'une position de démarrage de lecture de la liste de lecture, dans lequel les champs de temps associés auxdites options de lecture stockent des références temporelles respectives par rapport à la position de démarrage (57) d'élément de contenu multimédia principal, dans lequel une option d'aperçu (53-1) est la seule option disponible pour l'utilisateur pour la liste de lecture en cours (41) jusqu'à ce que l'utilisateur ait visualisé les éléments de contenu multimédia secondaire d'aperçu (45) dans leur totalité au moins une fois, dans lequel une fois cela réalisé, l'utilisateur se verra proposer davantage de champs d'options de lecture (53-2, 53-3, 53-4, 53-5).

2. Appareil selon la revendication 1, dans lequel les éléments de contenu multimédia principal comprennent chacun un d'une instance d'un film, d'un programme audio et/ou vidéo ou d'un clip audio et/ou vidéo ; et
dans lequel les éléments de contenu multimédia secondaire comprennent chacun un d'un clip publicitaire, d'un clip vidéo promotionnel, d'une bande-annonce, ou d'un clip intercalaire de parrainage.

3. Appareil selon la revendication 1 ou 2, dans lequel la liste de lecture inclut au moins un champ de stockage de données de position temporelle.

4. Appareil selon la revendication 3, dans lequel la liste de lecture reçue inclut des champs de stockage d'une position de lecture définie par l'utilisateur, d'une position de lecture de dernière visualisation et d'une position temporelle de fin.

5. Appareil selon l'une quelconque des revendications précédentes, dans lequel la liste de lecture inclut au moins un indicateur pour une indication d'options de lecture disponibles pour un utilisateur durant une lecture des éléments de contenu multimédia dans la liste de lecture.

6. Appareil selon la revendication 5, dans lequel la liste de lecture stocke un indicateur indiquant le fait qu'une sélection d'utilisateur d'un temps de démarrage de lecture est activée ou désactivée, et dans lequel l'indicateur est défini sur activé une fois qu'une lecture de l'au moins un élément de contenu multimédia secondaire d'aperçu a été terminée dans sa totalité.

7. Appareil selon l'une quelconque des revendications précédentes, comprenant en outre des moyens de stockage d'une liste du contenu multimédia disponible à partir du serveur multimédia et dans lequel l'appareil est agencé pour recevoir des mises à jour de la liste à partir du serveur multimédia.

8. Procédé de lecture d'éléments de contenu multimédia principal et secondaire dans un récepteur multimédia (15), le procédé comprenant, dans ledit récepteur multimédia (15), les étapes :
de transmission d'une demande à un serveur multimédia (11) d'un élément de contenu multimédia principal (30, 43) disponible à partir du serveur multimédia ;
de réception d'une liste de lecture (41) incluant une pluralité d'éléments de contenu multimédia principal et secondaire transmis à partir du serveur multimédia en réponse à la demande d'élément de contenu multimédia principal, dans lequel au moins un des éléments de contenu multimédia secondaire est un élément de contenu multimédia secondaire d'aperçu fourni à une position de lecture dans la liste de lecture avant l'élément de contenu multimédia principal demandé ; le procédé étant **caractérisé en ce qu'**il comprend les étapes :
de fourniture d'un écran de lecture d'une interface d'utilisateur (32) à un utilisateur, ledit écran de lecture contenant un champ d'options de lecture (53-1, 53-2, 53-3, 53-4, 53-5) pour une sélection d'une position de démarrage de lecture de la liste de lecture, dans lequel les champs de temps associés auxdites options de lecture stockent des références temporelles respectives par rapport à la position de démarrage (57) d'élément de contenu multimédia principal, dans lequel une option d'aperçu (53-1) est la seule option disponible pour l'utilisateur pour la liste de lecture en cours (41) jusqu'à ce que l'utilisateur ait visualisé les éléments de contenu multimédia secondaire d'aperçu (45) dans leur totalité au moins une fois, dans lequel une fois cela réalisé, l'utilisateur se verra proposer davantage de champs d'options de lecture (53-2, 53-3, 53-4, 53-5).

9. Support de stockage informatique stockant des instructions pouvant être mises en œuvre par ordinateur pour une configuration d'un appareil programmable comme l'appareil selon l'une quelconque des revendications 1 à 7.
